Europäisches Patentamt

European Patent Office

Office européen des brevets

(19)

(11) Veröffentlichungsnummer : **0 059 932**
**B1**

(12) **EUROPÄISCHE PATENTSCHRIFT**

(45) Veröffentlichungstag der Patentschrift :
**18.06.86**

(21) Anmeldenummer : **82101640.9**

(22) Anmeldetag : **03.03.82**

(51) Int. Cl.⁴ : **A 01 K 63/04, C 02 F 1/72,
C 02 F 7/00, C 02 F 1/68,
A 01 G 15/00, C 09 K 3/30,
B 65 D 83/14**

(54) **Dosierverfahren und Vorrichtung zur steuerbaren Abgabe von Sauerstoff und Flüssigkeiten in biologisch genutzte Systeme.**

(30) Priorität : **10.03.81 DE 3109064**

(43) Veröffentlichungstag der Anmeldung :
**15.09.82 Patentblatt 82/37**

(45) Bekanntmachung des Hinweises auf die Patenterteilung : **18.06.86 Patentblatt 86/25**

(84) Benannte Vertragsstaaten :
**AT BE CH FR GB IT LI LU NL SE**

(56) Entgegenhaltungen :
**DE-C- 552 797
US-A- 2 001 989
US-A- 3 542 524**

(73) Patentinhaber : **Söchting, Klaus, Dr.
Keltenstrasse 33
D-8029 Sauerlach (DE)**

(72) Erfinder : **Söchting, Klaus, Dr.
Keltenstrasse 33
D-8029 Sauerlach (DE)**

(74) Vertreter : **Hansen, Bernd, Dr.rer.nat. et al
Hoffmann, Eitle & Partner Patentanwälte Arabellastrasse 4
D-8000 München 81 (DE)**

## Beschreibung

Die Erfindung betrifft ein Verfahren sowie eine Dosiervorrichtung zur steuerbaren Abgabe von Sauerstoff und Flüssigkeiten aus einem eine wasserstoffperoxidhaltige Flüssigkeit enthaltenden Vorratsbehälter (A) in einen mit dem Vorratsbehälter (A) in Verbindung stehenden, einen Katalysator enthaltenden weiteren Behälter (C), bei dem durch katalytische Zersetzung eines Teiles des Wasserstoffperoxides in dem Vorratsbehälter (A) Sauerstoff als Treibgas erzeugt wird, das die wasserstoffperoxidhaltige Flüssigkeit in den weiteren Behälter (C) drückt, wo eine weitere katalytische Zersetzung des Wasserstoffperoxides stattfindet.

Auf verschiedenen Gebieten der Wartung biologischer Systeme besteht ein Bedarf nach einer gleichmässigen und gezielten Zuführung von Wirkstoffen über einen längeren Zeitraum hinweg. Dies ist z. B. der Fall bei der Haltung von Tieren und Pflanzen in geschlossenen Räumen und im Freien, innerhalb und ausserhalb von Gewässern, wobei Sauerstoff, Wasser, Dünge-, Entgiftungs-, Pflanzenschutz- und Desinfektionsmittel zugeführt werden sollen.

Gebiete, auf denen das erfindungsgemässe Verfahren wesentliche Vereinfachungen in Wartung und technischem Aufwand bringt bzw. Probleme erst befriedigend löst, sind im allgmeinen :

1. Sauerstoffversorgung, Entgiftung und Desinfektion in Aquarien und Freilandgewässern ;

2. Giessen von Pflanzen und Versorgen von Tränken für Tiere, wobei dem Wasser geeignete Wirkstoffe zugesetzt werden können.

DE-Patentanmeldung M 16325 IX/42e beschreibt eine Vorrichtung zum Dosieren eines fliessenden Zusatzstoffes, der einer strömenden Flüssigkeit zugesetzt wird, bei welcher über eine Dosierdrossel der Staudruck in der Zuleitung des Zusatzstoffes von einem vom Staudruck in der Flüssigkeitsleitung beaufschlagten Druckregler geregelt ist. DE-B-26 27 343 offenbart eine Dosiervorrichtung in Form einer Aerosolpackung, wobei als Treibgas verflüssigte Gase eingesetzt werden. DE-B-25 36 702 beschreibt ebenfalls eine Dosiervorrichtung sowie ein Verfahren, wobei zur Druckerzeugung in einem Treibgasbehälter Mikroorganismen, die eine kohlendioxidfreisetzende Gärung bewirken, dienen.

Verfahren, welche die Zugabe von Wasserstoffperoxid zu Abwässern zur Entgiftung von darin enthaltenen Nitrilen, Sulfiden, Sulfiten und Thiosulfaten beschreiben, sind aus DE-B-2054 123 und DE-B-25 34 892 bekannt.

US-A-2 001 989 beschreibt ein im Wasser liegendes, mit Wasserstoffperoxid gefülltes Gefäss, wobei durch katalytische Reaktion eines Enzymes eine Zerlegung in Wasser und Sauerstoff erfolgt, und der gebildete Sauerstoff das restliche $H_2O_2$ durch die Öffnung in Fischwasser austreibt.

Dosiervorrichtungen, die u. a. einen mit einem Streigrohr versehenen Behälter aufweisen, sind aus DE-B-16 67 055 und DE-C-12 51 278 bekannt.

So beschreibt DE-B-16 67 055 einen Dosierapparat für unter Druck stehende oder drucklose Leitungssysteme, der es erlaubt, den Flüssigkeitszufluss der in dem Behälter enthaltenen Lösung einer festen oder flüssigen Chemikalie über einen Mehrwegehahn zu regulieren. Diese Flüssigkeitsregulierung erfolgt jedoch nicht automatisch und sieht auch nicht den Einsatz einer sich katalytisch zersetzenden Chemikalie unter Bildung eines Treibgases vor. DE-C-12 51 278 beschreibt eine Vorrichtung zur dosierten Einführung einer Lösung eines festen Stoffes in einen Flüssigkeitsstrom über eine Drosselvorrichtung, wobei die Drosselvorrichtung aus porösem Material besteht. Auch durch diese Vorrichtung wird keine automatische Dosierung infolge kontinuierlicher katalytischer Zersetzung unter Bildung von Treibgas offenbart.

Aufgabe der vorliegenden Erfindung ist es, ein Dosierverfahren sowie eine Dosiervorrichtung zur Verfügung zu stellen, mit welcher Sauerstoff und Flüssigkeiten über einen langen Zeitraum hinweg gleichmässig und ohne schädliche Nebenprodukte dem biologischen System zugegeben werden können.

Insbesondere durch den Einsatz einer konstanten Katalysatoroberfläche ist es mit Hilfe des erfindungsgemässen Verfahrens möglich, dem jeweiligen biologischen System konstante Mengen an Sauerstoff zuzuführen.

Die vorstehende Aufgabe wird durch ein Verfahren zur steuerbaren Abgabe von Sauerstoff und Flüssigkeiten der eingangs genannten Art gelöst, das dadurch gekennzeichnet ist, dass von dem weiteren Behälter (C) ein nach oben zu kuppelförmig abgeschlossener, nach unten zum weiteren Behälter (C) hin offener Schleusenraum (B), der gleichfalls Katalysatormasse enthält, abgetrennt wird, und dass die wasserstoffperoxidhaltige Flüssigkeit in diesen Schleusenraum (B) oberhalb des Randes der unteren Öffnung eingeleitet wird.

Im weiteren wird die erfindungsgemässe Aufgabe durch eine Dosiervorrichtung gelöst, bestehend aus einem Vorratsbehälter (A) und einem damit in Verbindung stehenden weiteren Behälter (C), welche dadurch gekennzeichnet ist, dass in dem Vorratsbehälter (A) ein Steigrohr (6) angeordnet ist, welches durch eine Abdeckung (4) des Vorratsbehälters (A) in den weiteren Behälter (C) führt, und dass in dem weiteren Behälter (C) eine nach unten zum weiteren Behälter (C) hin offene Kupel (5) angeordnet ist, in die das obere Ende des Steigrohres (6) oberhalb des unteren Kuppelrandes mündet.

Das erfindungsgemässe Verfahren sowie die Vorrichtung zur Durchführung desselben zeichnen sich insbesondere dadurch aus, dass Wasserstoffperoxid in wässriger Lösung durch formstabile Katalysatoren etappenweise in Sauerstoff und reines Wasser zersetzt wird. Der in Wasserstoffperoxid in grosser Menge metastabil gespeicherte Sauerstoff wird dadurch gezielt und vollständig zum über lange Zeiträume hinweg gleichmässigen — d. h. ohne nennenswerten Trend — Austreiben von Flüssigkeiten und zur Sauerstoffversorgung verwendet.

Die Dosierung, d. h. die pro Zeiteinheit freigesetzte Menge Sauerstoff, der auch die abgegebene Flüssigkeitsmenge entspricht, ist proportional der aktiven Oberfläche eines festen Katalysators. Durch Wahl der Grösse der Oberfläche desselben wird die Dosierung bei einer bestimmten Temperatur und Konzentration der Wasserstoffperoxidlösung festgelegt. Die Betriebsdauer bzw. das Wartungsintervall ergibt sich dann aus der Grösse des Vorrats im Dosierbehälter. In einem Liter handelsüblicher 3- bzw. 30-%iger wässriger Wasserstoffperoxidlösung sind 10 bzw. 100 l Sauerstoff unter Normalbedingungen metastabil gespeichert, die zum Austreiben entsprechender Flüssigkeitsmengen genutzt werden können.

Von zahlreichen infrage kommenden und untersuchten Katalysatoren erwies sich insbesondere eine spezielle Form von Aktivkohle und an geeignete Träger gebundener Braunstein als hinreichend aktiv, beständig und formstabil ; insbesondere zeigte Braunstein eine hohe Benetzungsfähigkeit, was bei der Zersetzung zu kleinsten Bläschen führt, so dass mit diesem Katalysator eine Dosierung von Bruchteilen von ml/Tag eingestellt werden kann. Bei beiden Katalysatoren zeigte sich eine deutlich geringere als proportionale Abhängigkeit von der Konzentration der wässrigen Wasserstoffperoxidlösung, was durch eine Art Sättigungseffekt erklärt werden kann. Beide Katalysatoren zeigten eine Verdoppelung der Aktivität bei einer Temperaturerhöhung von jeweils 8°C, was in weiten Bereichen der Aktivitätssteigerung biologischer Systeme entspricht.

Nach einer besonderen Ausführungsform der Erfindung sollen genormte Katalysatorstückchen in die H2O2-Lösung eingebracht werden. Ausserdem ist es möglich, den Boden und/oder die Wandungen der Behälter, die Innenseite des Steigrohres oder einen Teil davon mit einem festen Katalysator zu überziehen oder damit zu bestücken.

Figur 1 zeigt schematisch die Dosiervorrichtung gemäss der Erfindung ;

Figur 2 gibt eine vereinfachte Ausführungsform des erfindungsgemässen Dosiergerätes wieder, wobei

Figur 3 eine Aufsicht von Fig. 2 darstellt.

Figur 4 zeigt eine Frontansicht einer weiteren Ausführungsform gemäss der Erfindung, wobei

Figur 5 eine Aufsicht von Fig. 3 darstellt.

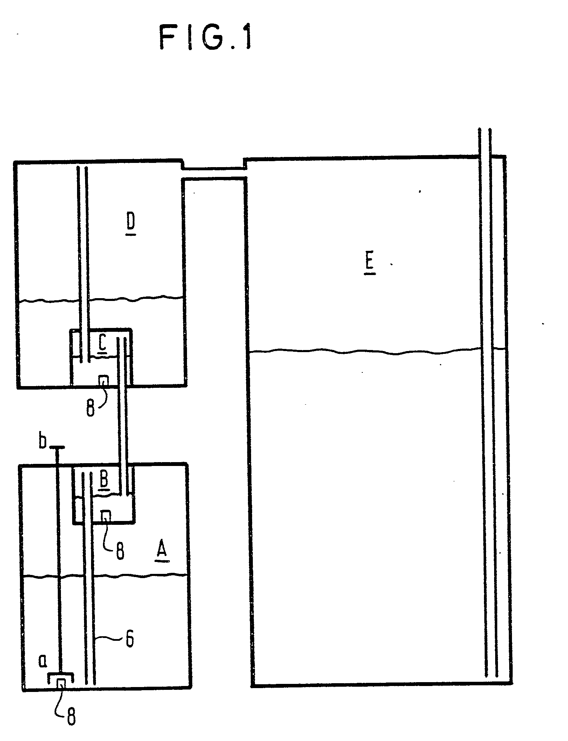

Das Dosiergerät gemäss der Erfindung besteht aus mehreren stabilen, durch Steigrohre miteinander verbundene Behältern. In Fig. 1 ist schematisch das universell einsetzbare Gerät gemäss der Erfindung wiedergegeben, welches durch Beschränkung auf spezielle Anwendungsbereiche zweckmässig vereinfacht werden kann.

Im Behälter A erfolgt die Dosierung, in den Behältern B und C wird die etappenweise Zersetzung von Wasserstoffperoxid fortgesetzt und abgeschlossen. Der Behälter D dient als Auffangbehälter, falls eine Zuführung von Wasser zu der zu dosierenden Flüssigkeit im Behälter E unerwünscht ist. Sauerstoff, der im Behälter A ausserhalb des Steigrohres freigesetzt ist, kann nicht entweichen und drückt die Lösung nach Behälter B, wo sich Entsprechendes, jedoch jetzt an einer grossen, im übrigen beliebigen Katalysatoroberfläche abspielt, und die Kaskade fortgesetzt wird.

Die Dosierung wird im Dosierbehälter A, dessen Wandung selbst nicht mit der Lösung reagieren darf, durch Wahl der Grösse der Katalysatoroberfläche, die sich mit der Lösung in Kontakt befindet und das Gas ausserhalb des Steigrohres abgibt, gesteuert. Dies kann geschehen durch die gezielte Zugabe genormter Katalysatorkügelchen oder durch einen grösseren Block, der entweder durch einen verstellbaren « Hut » (a) mehr oder weniger von der Flüssigkeit abgeschirmt oder mehr oder weniger weit unter das Steigrohr gebracht wird. Die genannten Massnahmen können auch miteinander kombiniert werden ; die Steuerung kann mit der Hand (b) oder automatisch, etwa über den osmotischen Druck in einer Pfeffer'schen Tonzelle geschehen.

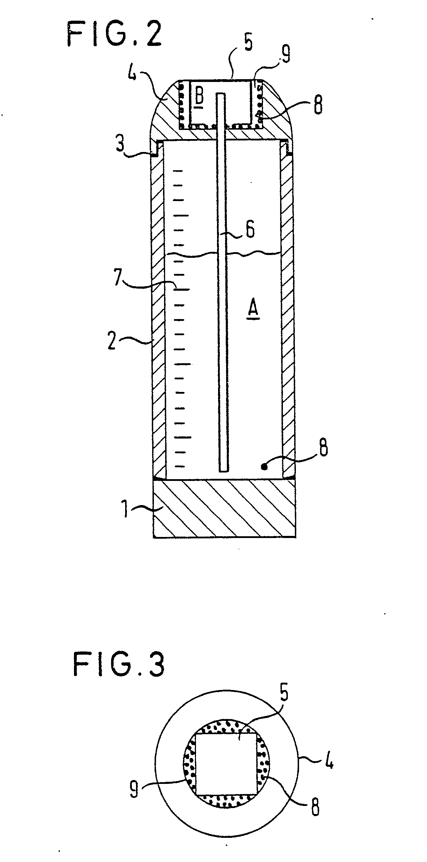

Für spezielle Anwendungsbereiche ergeben sich die beiden nachfolgend beschriebenen Vereinfachungen, welche in Fig. 2 und 3 und Fig. 4 und 5 dargestellt sind.

1. Bei Verwendung zur Sauerstoffversorgung, Entgiftung und Desinfektion in Aquarien und Freilandgewässern sind der Wirkstoff Wasserstoffperoxid und das Dosiermittel identisch. Es genügt daher, die Kombination des Dosierbehälters A mit der ersten Kaskadenstufe B. Eine grossräumige Austrittsöffnung, bei der das Dosiermittel dennoch vor eindringendem Wasser geschützt bleibt, wird erreicht, indem man den Behälter B derart mit einer Kuppel kombiniert, dass die Grundrisse verschiedene geometrische Figuren bilden, wie z. B. in Fig. 2 und 3 gezeigt wird ; in diesem Fall bildet der Behälter einen Kreis und die Kuppel ein Quadrat.

Eine derartig vereinfachte Ausführungsform des erfindungsgemässen Dosiergerätes ist in Fig. 2 und 3 wiedergegeben, dabei haben die Kennziffern folgende Bedeutungen : 1 Ballast, 2 Behälterwandung, 3 Verschluss, 4 Abdeckung, 5 Kuppel, 6 Steigrohr, 7 Markierung, 8 Katalysator, 9 Luftpolster, A und B stellen die jeweiligen Behälter dar.

In Funktion befindet sich das Gerät aufrecht im Wasser untergetaucht. Beim Einbringen in das Wasser schützt das Luftpolster unter der Kuppel vor einer Verdünnung der Dosierlösung. Der im Behälter B frei werdende Sauerstoff trägt nicht wesentlich zur Versorgung bei, da freier Sauerstoff nur sehr schwer in Wasser gelöst wird und kaum diffundiert ; der frei werdende Sauerstoff dient lediglich zur Aufrechterhaltung eines Gaspolsters unter der Kuppel (Ventilwirkung), zur Erzeugung einer leichten Strömung (Verteilung des Wirkstoffes) und zur Aktivitätskontrolle (kleinste Undichtigkeiten bedeuten Inaktivität).

Die wesentliche Wirkung wird durch das zum grössten Teil unzersetzt gebliebene Wasserstoffperoxid erreicht. Es ist vollständig wasserlöslich und diffundiert daher rasch auch in die entferntesten Winkel, die neuralgischen Punkte ; es hebt das Redox-Potential des Wassers und oxidiert z. B. Schwefelwasserstoff und giftige Abbauprodukte von Eiweiss zu ungiftigen Stoffen ; es tötet Wassertrüber, wie Kieselalgen und Bakterien bereits in einer für höhere Pflanzen und auch Fischbrut völlig unschädlichen Konzentration. Das Wasserstoffperoxid zersetzt sich an Glas und rauhen Oberflächen (z. B. Mulm), so dass dadurch das Wasser grossflächig mit freiem Sauerstoff angereichert und ein Anwachsen der Konzentration an Wasserstoffperoxid begrenzt wird.

Die Temperaturabhängigkeit der Dosierung ist der Zersetzungsgeschwindigkeit und dem Sauerstoffverbrauch im Gewässer angepasst. Der Vorrat an Wasserstoffperoxid und damit die Abmessungen des Gerätes können sehr klein gehalten werden, da z. B. in einer 30-%igen Lösung 17 500 × soviel Sauerstoff metastabil gespeichert und optimal genutzt wird, als bei 25°C in gesättigtem Wasser gelöst ist. Ein besonders hervorzuhebender Vorteil des Gerätes ist es z. B., dass es in Freilandgewässern auch unter einer geschlossenen Eisdecke und länger als ein halbes Jahr problemlos funktioniert.

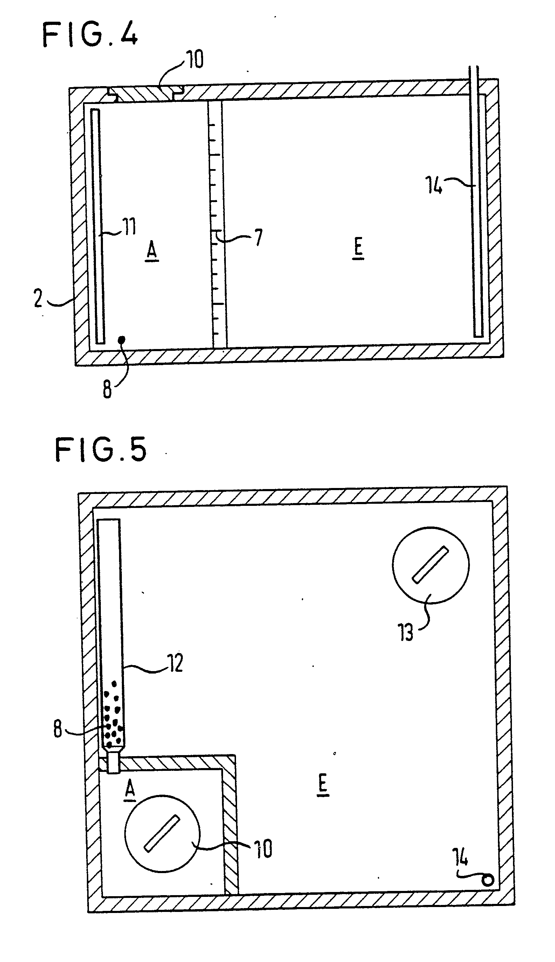

2. Bei Verwendung zum Giessen von Pflanzen und Versorgen von Tränken für Tiere, wobei dem Wasser geeignete Wirkstoffe zugesetzt werden können, ist im allgemeinen eine geringfügige Verdünnung der Wirkstoffe mit Wasser ohne Bedeutung, und es kann auf den Auffangbehälter D in Fig. 1 verzichtet werden. Weiterhin hat sich gezeigt, dass die in Fig. 1 durch die Behälter B und C gebildeten Kaskadenstufen durch ein einfaches, hinreichend langes, mit Katalysatorbröckchen gefülltes Rohr ersetzt werden können. Verglichen mit der Zersetzungsgeschwindigkeit erfolgt der Konzentrationsausgleich von der Eintritts- bis zur Austrittsöffnung genügend langsam. Noch vorhandene Spuren in ppm-Bereich können eventuell auch noch im Flüssigkeitsbehälter E durch Katalysatoren abgebaut derden. Dosierbehälter und Zersetzungsrohr können leicht in dem um ein Vielfaches (10- bis 100-fach) grösseren Flüssigkeitsbehälter E untergebracht werden, wie dies in Fig. 4 abgebildet ist.

In Fig. 4 und 5 (Aufsicht) wird eine derartig vereinfachte Ausführungsform gemäss der Erfindung wiedergegeben, dabei haben die Bezugszeichen die folgenden Bedeutungen : 8 Katalysator, 10 Einfüllöffnung für Behälter A, 11 Steigrohr in Behälter A, 12 Zersetzungsrohr, 13 Einfüllöffnung für Behälter E, 14 Steigrohr in Behälter E.

Das sich in Betrieb befindliche Dosiergerät kann in beliebiger Weise an das zu versorgende System angebracht werden, und es können z. B. epiphytisch in grösserer Höhe wachsende Pflanzen vom Boden aus mit Wasser und Nährstoffen versorgt werden, etwa indem man das Steigrohr 14 mit einem Schlauch entsprechend verlängert.

**Patentansprüche**

1. Verfahren zur steuerbaren Abgabe von Sauerstoff und Flüssigkeiten aus einem eine wasserstoffperoxidhaltige Flüssigkeit enthaltenden Vorratsbehälter (A) in einen mit dem Vorratsbehälter (A) in Verbindung stehenden, einen Katalysator enthaltenden weiteren Behälter (C), bei dem durch katalytische Zersetzung eines Teiles des Wasserstoffperoxides in dem Vorratsbehälter (A) Sauerstoff als Treibgas erzeugt wird, das die wasserstoffperoxidhaltige Flüssigkeit in den weiteren Behälter (C) drückt, wo eine weitere katalytische Zersetzung des Wasserstoffperoxides stattfindet, dadurch gekennzeichnet, dass von dem weiteren Behälter (C) ein nach oben zu kuppelförmig abgeschlossener, nach unten zum weiteren Behälter (C) hin offener Schleusenraum (B), der gleichfalls Katalysatormasse enthält, abgetrennt wird, und dass die wasserstoffperoxidhaltige Flüssigkeit in diesen Schleusenraum (B) oberhalb des Randes der unteren Öffnung eingeleitet wird.

2. Dosiervorrichtung zur steuerbaren Abgabe von Sauerstoff und Flüssigkeiten in biologisch genutzte Systeme, bestehend aus einem Vorratsbehälter (A) und einem damit in Verbindung stehenden weiteren Behälter (C), dadurch gekennzeichnet, dass in dem Vorratsbehälter (A) ein Steigrohr (6) angeordnet ist, welches durch eine Abdeckung (4) des Vorratsbehälters (A) in den weiteren Behälter (C) führt, und dass in dem weiteren Behälter (C) eine nach unten zum weiteren Behälter (C) hin offene Kuppel (5) angeordnet ist, in die das obere Ende des Steigrohres (6) oberhalb des unteren Kuppelrandes mündet.

3. Dosiervorrichtung nach Anspruch 2, dadurch gekennzeichnet, dass jeweils der kleinere der beiden Behälter (A, C) in dem grösseren angeordnet ist.

4. Dosiervorrichtung nach Anspruch 2, dadurch gekennzeichnet, dass eine Vorrichtung (a) zur Verkleinerung der aktiven Oberfläche von in dem Vorratsbehälter (A) angeordneter Katalysatormasse (8) vorgesehen ist.

5. Dosiervorrichtung nach Anspruch 4, dadurch gekennzeichnet, dass das Steigrohr (6) in der Weise beweglich ausgebildet ist, dass es die Katalysatormasse (8) ganz oder teilweise überdecken kann.

6. Dosiervorrichtung nach Anspruch 2, dadurch gekennzeichnet, dass der Vorratsbehälter (A) mit einem Ballast (1) versehen ist.

**Claims**

1. Method for the controllable release of oxygen and liquids from a supply container (A) containing a hydrogenperoxide-containing liquid into a further container (C) communicating with the supply container (A) and containing a catalyst, in which method oxygen is produced as a driving gas by the catalytic decomposition of a portion of the hydrogenperoxide in the supply container (A), which drive gas pressurizes the hydrogenperoxide containing liquid in the further container (C) where a further catalytic decomposition of the hydrogenperoxide takes place, characterized in that a trap chamber (B) is separated from the further container (C) which is upwardly domed shaped and closed and downwardly open to the further container (C), and which likewise contains catalyst material, and in that the hydrogen-peroxide-containing liquid is conducted into this trap chamber (B) above the edge of the lower opening.

2. Dispensing device for the controllable release of oxygen and liquids in biologically effective systems, consisting of a supply chamber (A) and a further container (C) in communication therewith, characterized in that a rise tube (6) is arranged in the supply container (A) which leads via a cover (4) of the supply container (A) into the further container (C), and in that in the further container (C) a dome (5) is arranged which is open downwardly to the further container (C), in which dome the upper end of the rise tube (6) discharges above the lower edge of the dome.

3. Dispensing device according to Claim 2 characterized in that the smaller of the two containers (A, C) is arranged in the larger.

4. Dispensing device according to Claim 2 characterized in that a device (a) is provided for reducing the active surface of catalyst material (8) arranged in the supply container (A).

5. Dispensing device according to Claim 4 characterized in that the rise tube (6) is movably arranged in such manner that it can completely or partially overlap the catalyst material (8).

6. Dispensing device according to Claim 2 characterized in that the supply container (A) is provided with a balast weight (1).

**Revendications**

1. Procédé pour l'émission réglable d'oxygène et de liquides à partir d'un récipient (A) comportant un liquide contenant de l'eau oxygénée vers un deuxième récipient (C) communiquant avec le récipient (A) et contenant un catalyseur et dans lequel est généré par décomposition catalytique d'une partie de l'eau oxygénée dans le récipient (A), de l'oxygène en tant que gaz propulseur qui refoule le liquide contenant l'eau oxygénée dans le deuxième récipient (C), où une deuxième décomposition catalytique de l'eau oxygénée a lieu, caractérisé par le fait qu'un compartiment faisant fonction d'écluse (B) sous forme de dôme fermé à sa partie supérieure et ouvert vers le bas, vers le deuxième récipient (C) contenant également une matière catalytique, sépare le deuxième récipient (C) et que le liquide contenant l'eau oxygénée est introduit dans ce compartiment faisant fonction d'écluse (B) au-dessus du bord de l'ouverture inférieure.

2. Appareil de dosage pour l'émission réglable d'oxygène et de liquides dans des systèmes utilisés biologiquement, constitués d'un récipient (A) et d'un deuxième récipient (C) communiquant avec ce dernier, caractérisé par le fait que dans le récipient (A) est agencé un tube ascendant (6) qui débouche dans le deuxième récipient (C) en traversant un recouvrement (4) du récipient (A) et que dans le deuxième récipient (C) est agencé un dôme ouvert dirigé vers le bas, vers le deuxième récipient (C), dans lequel débouche l'extrémité supérieure du tube ascendant (6) au-dessus du bord inférieur du dôme.

3. Appareil de dosage selon la revendication 2, caractérisé par le fait que le plus petit des 2 récipients (A, C) est agencé dans le récipient le plus grand.

4. Appareil de dosage selon la revendication 2, caractérisé par le fait qu'un dispositif (a) destiné à la réduction de la surface active de la matière catalytique agencée dans le récipient (A) est prévu.

5. Appareil de dosage selon la revendication 4, caractérisé par le fait que le tube ascendant (6) est construit de telle manière qu'il soit mobile et qu'il puisse recouvrir complètement ou en partie la matière catalytique (8).

6. Appareil de dosage selon la revendication 2, caractérisé par le fait que le récipient (A) est muni d'un lest (1).

# FIG.1

# FIG.2

# FIG.3

# FIG.4

10

11

A

2

7

E

14

8

# FIG.5

12

8

13

A

E

10

14